# EUROPEAN PATENT APPLICATION

(11) **EP 4 554 070 A1**
(43) Date of publication of application: **14.05.2025**
(21) Application number: 23852256.9
(22) Date of filing: 23.06.2023
(51) Int. Cl.: H02K 41/03

(54) **LINEAR MOTOR ACTUATOR**

(30) Priority: 09.08.2022 JP 2022126927
(71) Applicant: Saginomiya Seisakusho, Inc., Tokyo 165-0033 (JP)
(72) Inventor: IN, Eisei, Sayama-shi, Saitama 350-1395 (JP); HOSAKA, Tomohiro, Sayama-shi, Saitama 350-1395 (JP); OGAWA, Satoru, Sayama-shi, Saitama 350-1395 (JP); MASUYAMA, Ryotaro, Sayama-shi, Saitama 350-1395 (JP)
(74) Representative: Bandpay & Greuter
(86) International application number: PCT/JP2023/023335
(87) International publication number: WO 2024/034272

(57) **Abstract**

Provided is a linear motor actuator including a yoke that is movable while facing a stator, the linear motor actuator including: magnets disposed directly on both surfaces of the yoke in a thickness direction; a width direction roller guide mechanism supporting both ends of the yoke in a width direction; and a thickness direction roller guide mechanism supporting both ends of the yoke in the thickness direction, the width direction roller guide mechanism supporting the yoke such that a position of the yoke in the width direction on at least one side in the width direction is fixed while a position of the yoke in the width direction on another side in the width direction is variable.

## Description

### [Technical Field]

The present invention relates to a linear motor actuator that linearly vibrates in a direction of extension and contraction of a component under test in various tests for vehicles and vehicle components.

### [Background Art]

In the related art, there is a need for durability evaluation and performance evaluation in various tests for a variety of vehicles and vehicle components. Such tests for durability evaluation and performance evaluation are performed by linearly vibrating components under test using vibrators, and linear motor actuators, for example, are driven as the vibrators. There is a concern that a temperature rise due to heat generation may occur inside the linear motor actuators and yokes with movable elements may expand in a width direction. In this regard, Patent Literature 1 describes a linear motor having a structure that absorbs thermal expansion of a yoke due to heat generation.

### [Citation List]

### [Patent Literature]

[Patent Literature 1] Japanese Patent Laid-Open No. 2003-324888

### [Summary of Invention]

### [Technical Problem]

However, according to Patent Literature 1, a thickness and a space of a movable element are needed to attach a slide guide to a side surface, and an increase in mass of the movable portion may lead to degradation of output acceleration and responsiveness of the linear motor actuator. On the other hand, if the thickness of the movable element is reduced for weight reduction, the size of the slide guide to be attached decreases, durability of the guide mechanism may be degraded due to fretting at the time of minute vibration, and occurrence of vibration and guide moving noise may increase.

Therefore, an object of the present invention is to provide a linear motor actuator that ensures prolonged durability of guide mechanisms while reducing the weight of a movable element and improving output acceleration and responsiveness.

### [Solution to Problem]

In order to achieve the above object, the present invention is a linear motor actuator including a yoke that is movable while facing a stator, the linear motor actuator including: magnets disposed directly on both surfaces of the yoke in a thickness direction; a width direction roller guide mechanism supporting both ends of the yoke in a width direction; and a thickness direction roller guide mechanism supporting both ends of the yoke in the thickness direction, the width direction roller guide mechanism supporting the yoke such that a position of the yoke in the width direction on at least one side in the width direction is fixed while a position of the yoke in the width direction on another side in the width direction is variable.

### [Advantageous Effects of Invention]

With the above configuration, it is possible to ensure prolonged durability of guide mechanisms while improving output acceleration and responsiveness of a linear motor actuator.

### [Brief Description of Drawings]

[Figure 1] Figure 1 is a schematic fragmentary sectional view of a linear motor actuator according to an embodiment of the present invention.
[Figure 2] Figure 2(a) is an enlarged view within a IIa frame in Figure 1, and Figure 2(b) is an enlarged view within a IIb frame in Figure 2(a).
[Figure 3] Figure 3 is a schematic sectional view along a line III-III in Figure 1.
[Figure 4] Figure 4(a) is a partial sectional view of Figure 3 before a yoke expands in a width direction due to thermal expansion, and Figure 4(b) is a partial sectional view of Figure 3 after the yoke has expanded in the width direction due to thermal expansion. Note that a block 33 and a block 39 are provided at positions where the block 33 and the block 39 do not come into contact with each other.
[Figure 5] Figure 5 is a schematic sectional view of a linear motor actuator according to another embodiment of the present invention.
[Figure 6] Figure 6 is an enlarged view within a VI frame in Figure 5.
[Figure 7] Figure 7 is a schematic sectional view of a linear motor actuator in the related art.

### [Description of Embodiments]

Hereinafter, embodiments of the present invention will be described in detail with reference to the accompanying drawings. Note that the present invention is not limited by the embodiments.

### (Configuration example of linear motor actuator)

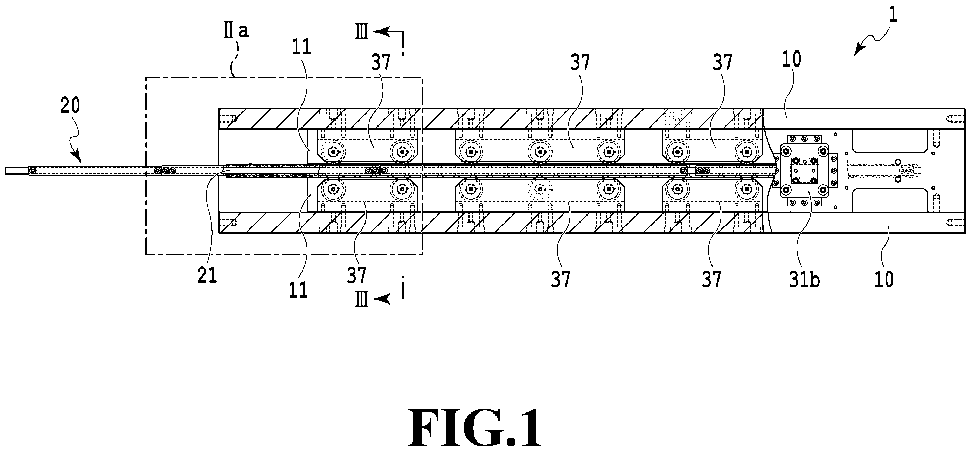

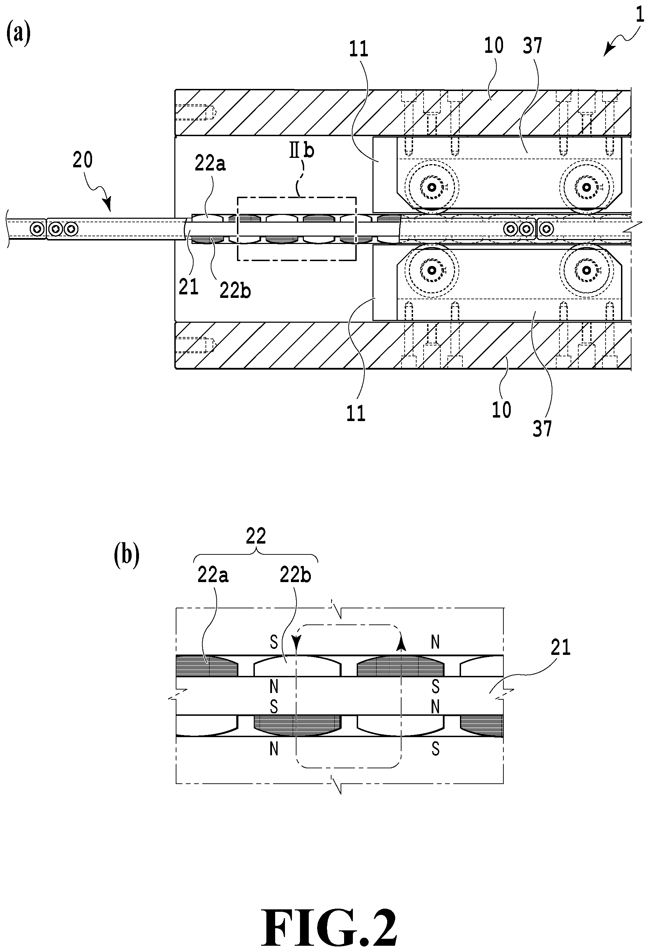

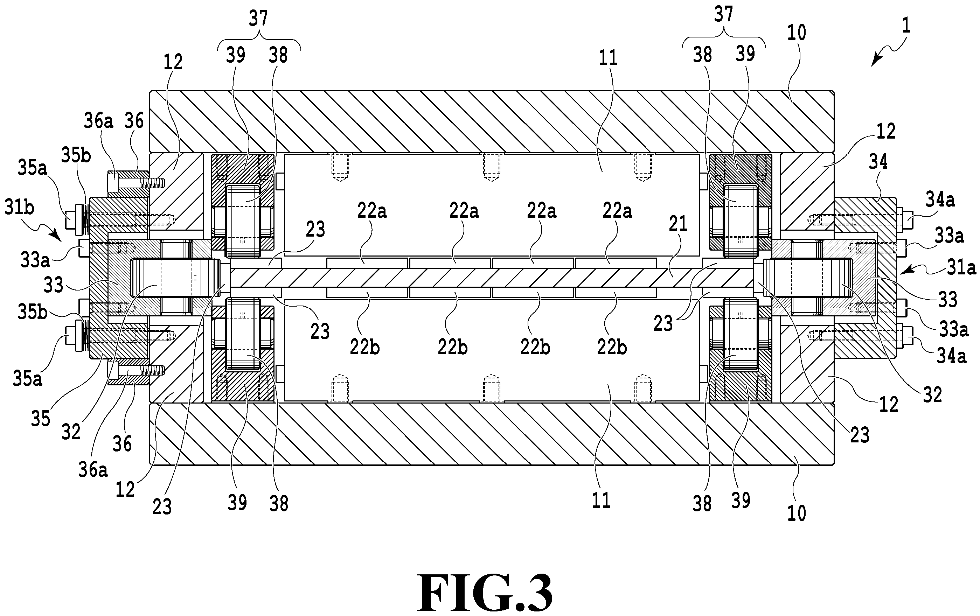

Figure 1 is a schematic fragmentary sectional view of a linear motor actuator according to an embodiment of the present invention. Figure 2(a) is an enlarged view within a IIa frame in Figure 1, and Figure 2(b) is an enlarged view within a IIb frame in Figure 2(a). Figure 3 is a schematic sectional view along a line III-III in Figure 1. A linear motor actuator 1 includes a pair of frames 10, leg portions 12 (see Figure 3) disposed at both end portions of the pair of frames 10 to form a hollow square sectional shape, stators 11 disposed on inner surfaces of the pair of frames 10 such that the stators 11 face each other, a movable element 20 including a yoke 21 that is movable while facing the stators 11, width direction roller guide mechanisms 31a and 31b that fixes the position of the yoke 21 in the width direction on at least one side in the width direction with the position of the yoke 21 in the width direction on the other side in the width direction made variable, and thickness direction roller guide mechanisms 37 disposed on the inner surfaces of the pair of frames 10 and supporting both ends of the yoke 21 in the thickness direction.

### (Stator)

The stators 11 include coils to generate a magnetic field, are disposed in the longitudinal direction, and are fixed to the frames 10 with a plurality of bolts. The stators 11 are disposed such that one stator 11 faces the other stator 11, and the movable element 20 moves between the stators 11. Although the stators 11 are fixed with the bolts in the present embodiment, it is only necessary to fix the frames 10 and the stators 11, and the stators 11 may be fixed with a heat-resistant adhesive or the like. A moving magnetic field that linearly moves is generated by causing a drive current to flow from a power source supply portion, which is not illustrated, through the coils, and the movable element 20 is caused to linearly move relative to the stators 11.

### (Movable element)

The movable element 20 includes the yoke 21, magnets 22, and backing plates 23 disposed at both end portions of the yoke 21 in the width direction and both end portions thereof in the thickness direction. As illustrated in Figure 2(b), the magnets 22 are alternately disposed such that magnetic poles differ in the longitudinal direction of the yoke 21 and are disposed such that the magnetic poles are reversed on both surfaces of the yoke 21 in the thickness direction. In the present embodiment, for a magnet 22a, the magnetic pole thereof on the side of the stator 11 is an N pole and the magnetic pole on the side of the yoke 21 is an S pole, and for a magnet 22b, the magnetic pole on the side of the stator 11 is an S pole and the magnetic pole on the side of the yoke 21 is an N pole. As the backing plates 23, members with high hardness are attached as backing plates for rollers 38 of the thickness direction roller guide mechanisms 37, which will be described later, and contact parts between the backing plates 23 and the rollers 38 can bear repeated contact for a long period of time. The backing plates 23 have a size only within a range with which the rollers 38 come into contact to thereby minimize the mass of the movable element 20. Although the backing plates 23 are disposed on the yoke 21 in the present embodiment, the present invention is not limited thereto, and only the yoke 21 may be provided. In this case, the yoke 21 itself needs to have hardness with which the yoke 21 can bear the contact with the rollers 38, and the yoke may thus be produced using carbon steel or the like including a ferromagnetic material.

In this manner, the movable element 20 according to the present embodiment allows disposition of the magnets 22 without taking magnetic pole saturation caused by the magnets 22 into consideration, and it is possible to minimize the thickness of the yoke 21 in the thickness direction. Furthermore, it is possible to reduce the mass of the movable element 20 and to improve output acceleration and responsiveness of a vibrating operation.

### (Features of sectional shape of linear motor actuator)

In the present invention, each thickness direction roller guide mechanism 37 has two or three rollers 38 and a block 39 supporting the rollers 38, and a plurality of thickness direction roller guide mechanisms 37 are disposed in the longitudinal direction. In addition, the thickness direction roller guide mechanisms 37 are fixed to the frames 10 with bolts, are positioned on the inner surfaces of the frames 10, are positioned in the thickness direction of the movable element 20, that is, in each of the upper and lower directions on paper of Figure 3, and abut the backing plates 23 of the movable element 20. It is possible to support the positions in the thickness direction by the thickness direction roller guide mechanisms 37 abutting the movable element 20, and the rollers 38 movably support the movable element 20. This allows for the support of the position of the movable element 20 even during vibration in various tests for vehicles and vehicle components. Since the rollers 38 are not included in the mass of the movable element 20, it is possible to use rollers 38 with a size leading to a large load capacity without increasing the mass of movable portions and to ensure prolonged lifetime of the guide mechanisms. Note that the blocks 39 of the thickness direction roller guide mechanisms 37 are provided at positions at which the blocks 39 do not come into contact with blocks 33 of the width direction roller guide mechanisms 31a and 31b, which will be described later.

The width direction roller guide mechanisms 31a and 31b are provided between the leg portions 12 of the frame 10 on one side and the leg portions 12 of the frame 10 on the other side to face each other in the width direction of the movable element 20. As illustrated in Figure 3, the width direction roller guide mechanism 31a on one side includes a roller 32 supporting the movable element 20, the block 33 supporting the roller 32, and a block 34 fixing the block 33 to an inner surface with bolts 33a and fixed to side surfaces of the leg portions 12 of the frames 10 with bolts 34a. The roller 32 of the width direction roller guide mechanism 31a fixes the position of the movable element 20 in the width direction while supporting a side end portion of the movable element 20. Similarly to the thickness direction roller guide mechanisms 37, the rollers 32 are not included in the mass of the movable element 20, and it is thus possible to use the rollers 32 with a size leading to a large load capacity without increasing the mass of the movable portion and to ensure prolonged lifetime of the guide mechanisms.

The width direction roller guide mechanism 31b on the other side includes the roller 32 supporting the movable element 20, the block 33 supporting the roller 32, a block 35 fixing the block 33 to an inner surface with bolts 33a and variably fixed to side surfaces of the leg portions 12 of the frame 10 with bolts 35a via springs 35b that are elastic elements, and roller guide support elements 36 securely supporting the block 35 in the thickness direction and the longitudinal direction of the yoke 21 and fixed to the side surfaces of the leg portions 12 of the frames 10 with bolts 36a. Although details will be described later, the rollers 32 of the width direction roller guide mechanisms 31b support the movable element 20 such that the position thereof in the width direction is variable while supporting side end portions of the movable element 20. In the present embodiment, the springs 35b that are elastic members are provided between the block 35 and the bolts 35a in order to address thermal expansion of the yoke 21. In this manner, a force acts in a direction from the roller 32 toward the block 35 of the width direction roller guide mechanism 31b, and it is possible to address a force caused by the expansion, even if the yoke 21 expands in the width direction of the yoke 21 due to heat.

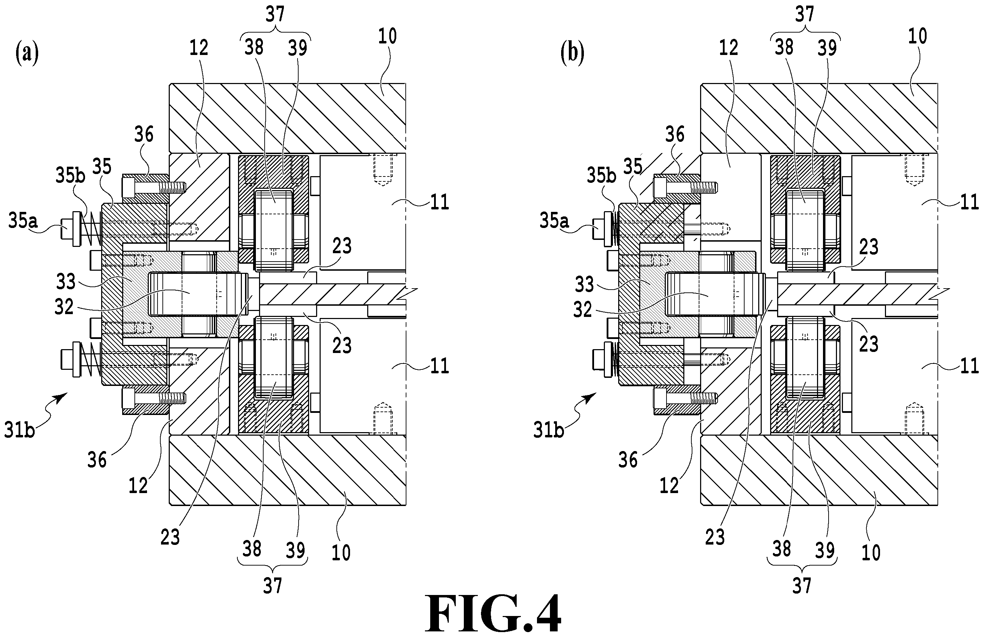

Figure 4(a) is a schematic sectional view of Figure 3 of the linear motor actuator 1 before the yoke 21 expands. In the present embodiment, vibration is performed by causing the movable element 20 to move in the longitudinal direction. At this time, the roller 32 of the width direction roller guide mechanism 31b supports the position of the movable element 20 in the width direction, and the position of the movable element 20 in the thickness direction is supported by the rollers 38 of the pair of thickness direction roller guide mechanisms 37. In this manner, the width direction roller guide mechanism 31b and the pair of thickness direction roller guide mechanisms 37 can move the movable element 20 in the longitudinal direction.

On the other hand, if the yoke 21 expands in the width direction due to thermal expansion of the movable element 20, the springs 35b are biased outward in the width direction such that the thermal expansion relative to the block 33 and the block 35 is absorbed via the roller 32 of the width direction roller guide mechanism 31b while the support in the thickness direction is achieved by the pair of thickness direction roller guide mechanisms 37 as illustrated in Figure 4(b).

In addition, the structure in which the backing plates 23 of the movable element 20 in the width direction and the roller 32 of the width direction roller guide mechanism 31b are brought into contact with each other and support is achieved by the backing plates 23 of the movable element 20 in the thickness direction and the rollers 38 of the pair of thickness direction roller guide mechanisms 37 is adopted, and it is thus possible to support the position of the movable element 20.

The block 35 provided on the outer surface of the leg portions 12 of the frames 10 has a function of supporting the roller 32 via the block 33, and the support in the longitudinal direction and the thickness direction is achieved by the roller guide support elements 36 in order to further reinforce rigidity of the block 35. The roller guide support elements 36 variably support the position of the block 35. Although the roller guide support elements 36 are adapted to be in contact with the entire contact surfaces of the block 35 in the present embodiment, it is only necessary for the roller guide support elements 36 to be able to support the block 35, and parts of the block 35 and the roller guide support elements 36 may be in contact.

In this manner, with such a configuration of the width direction roller guide mechanism 31b, the width direction roller guide mechanism 31b is pressed against the side surface of the yoke 21 in the width direction with an appropriate pressurization force by the springs of the width direction roller guide mechanism 31b, follows expansion and contraction of the yoke 21 without being separated therefrom, and can move the movable element 20 while supporting the position of the movable element 20 in the width direction, even if the yoke 21 thermally expands in the width direction. Furthermore, it is possible to prevent a large load from being imparted on the rollers of the roller guide mechanisms by the elastic members releasing displacement of thermal expansion, and to ensure prolonged lifetime.

In addition, it is possible to reduce moving noise that may be caused by the slide guide in Patent Literature 1 and to reduce influences on sound evaluation of a component under test during a test of the component under test, by the rollers 32 of the width direction roller guide mechanisms 31a and 31b supporting and moving the side end portions of the movable element 20.

Although the elastic members are springs in the present embodiment, the present invention is not limited thereto, and elastic elements such as elastomers, for example, may be interposed between the bolts 35a and the block 35.

### (Features of load suppressing roller guide mechanism of linear motor actuator)

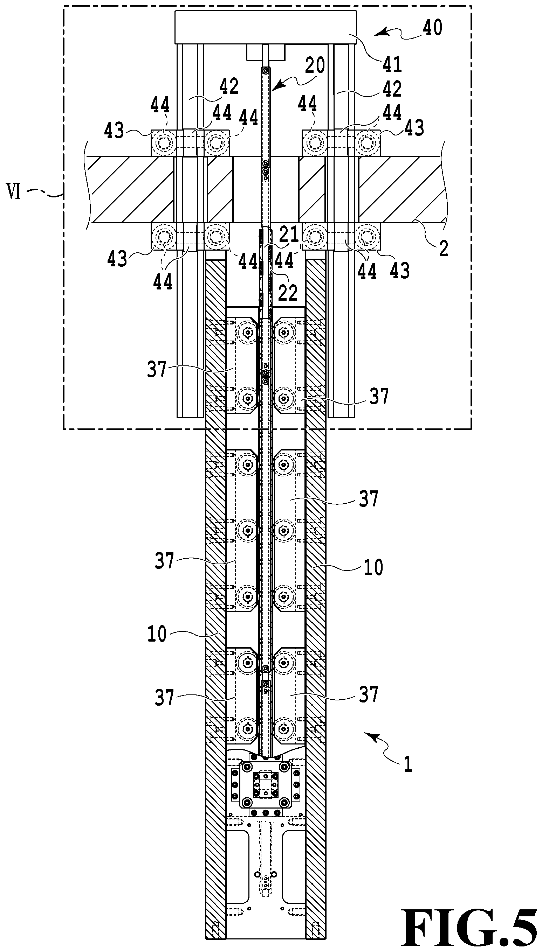

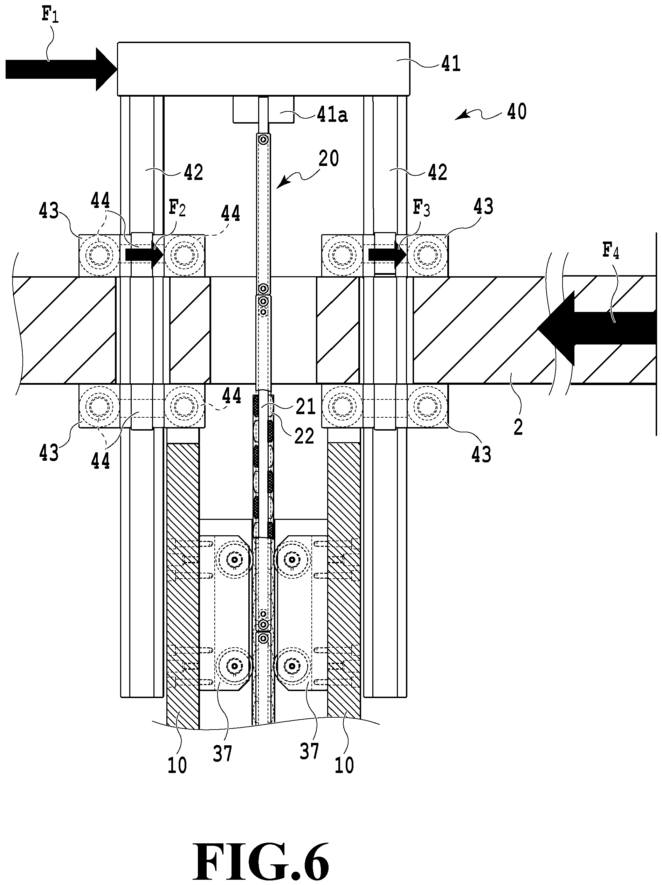

Figure 5 is a schematic sectional view of a linear motor actuator according to another embodiment of the present invention, which is a linear motor actuator including a lateral load guide mechanism. Figure 6 is an enlarged view within a VI frame in Figure 5. There may be a case where a lateral load is imparted in a direction perpendicularly intersecting the extension direction as a test condition for a component under test and a case where a load is generated in the perpendicularly intersecting direction as a characteristic of the component under test, during various tests for vehicles and vehicle components. In such a case, the linear motor actuator 1 according to the present invention detachably includes a load suppressing guide mechanism 40 that suppresses a lateral load (hereinafter, also referred to as a lateral load suppressing guide mechanism) in order to receive a force in the lateral direction perpendicular to the longitudinal direction (hereinafter, also referred to as a lateral load). The lateral load suppressing guide mechanism 40 is detachably fixed to the linear motor actuator 1 with bolts, which are not illustrated. Although the lateral load suppressing guide mechanism 40 is detachable in the present embodiment, the lateral load suppressing guide mechanism 40 may be configured integrally with the linear motor actuator 1.

The lateral load suppressing guide mechanism 40 includes a table 41, a pair of guide shafts 42 disposed at both end portions of the table 41, and lateral load roller guides 43 fixed to a test apparatus frame 2.

The table 41 is connected to a distal end of the movable element 20 of the linear motor actuator 1 and moves in the longitudinal direction along with the pair of guide shafts 42. The surface of the table 41 on the side opposite to the surface thereof connected to the distal end of the movable element 20 is connected to the component under test to transmit a vibrating operation to the component under test.

Each lateral load roller guide 43 includes two pairs of rollers 44 that sandwich each guide shaft 42 in the lateral direction perpendicularly intersecting the longitudinal direction and the vertical direction perpendicularly intersecting the longitudinal direction and the lateral direction. In each lateral load roller guide 43, the two pairs of rollers 44 are disposed at both end portions in the longitudinal direction.

If a lateral load F1 is imparted as illustrated in Figure 6, lateral loads F2 and F3 are transmitted to each roller 44 of the lateral load suppressing guide mechanism 40 through the guide shafts 42 of the lateral load suppressing guide mechanism 40 with rigidity. Also, the lateral load roller guides 43 of the lateral load suppressing guide mechanism 40 absorb a reaction force F4 of the fixed test apparatus frame 2. Since the rollers 44 of the lateral load suppressing guide mechanism 40 can perform rotational movement even when they receive the lateral loads F2 and F3, the rollers 44 do not affect motion of the component under test in the vibrating operation.

In this manner, the yoke 21 of the movable element 20 of the linear motor actuator 1 is not affected by the lateral load by the lateral load roller guides 43 of the lateral load suppressing guide mechanism 40 absorbing F4, and it is thus possible to minimize the thickness without requiring strength to address the lateral load. In addition, this enables the movable element 20 to be used even under a condition that a lateral load is input with the mode of the lightweight linear motor actuator 1 maintained.

### (Comparative example with linear motor actuator in related art)

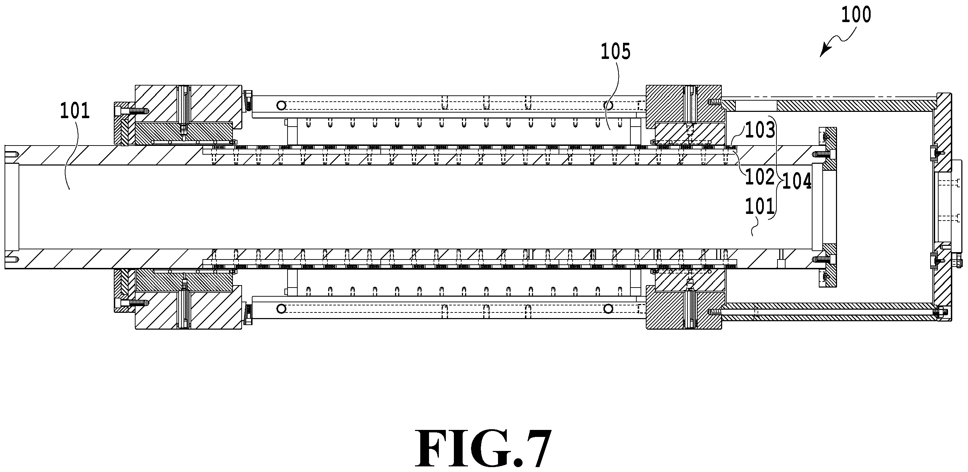

Figure 7 is a schematic sectional view of a linear motor actuator in the related art. The linear motor actuator 100 in the related art includes a movable element 104 including a plurality of magnet plates in which magnets 103 are disposed on yokes 102 that have widely been distributed in the market on side surfaces of a structural body 101, and stators 105 including coils facing the movable element 104.

The linear motor actuator 100 in the related art has the structural body 101 to which the magnet plates are attached. However, the linear motor actuator in the related art has a problem that the mass of the movable element 104 increases and output acceleration, responsiveness, and the like are degraded.

However, according to the present invention, it is possible to minimize the thickness of the yoke 21 in the thickness direction without taking magnetic pole saturation into consideration by alternately disposing the magnets 22 on the yoke 21 of the movable element 20 such that magnetic poles differ in the longitudinal direction and the magnetic poles are reversed on both surfaces of the yoke 21 in the thickness direction as illustrated in Figure 1 and the like as a solution to the above problem. It is thus possible to reduce the weight of the movable element without requiring the structural body as in the linear motor actuator in the related art.

### [Reference Signs List]

1 Linear motor actuator
11 Stator
21 Yoke
22 Magnet
31a, 31b Width direction roller guide mechanism
37 Thickness direction roller guide mechanism

## Claims

1. A linear motor actuator including a yoke that is movable while facing a stator, the linear motor actuator comprising:
magnets disposed directly on both surfaces of the yoke in a thickness direction;
a width direction roller guide mechanism supporting both ends of the yoke in a width direction; and
a thickness direction roller guide mechanism supporting both ends of the yoke in the thickness direction,
wherein
the width direction roller guide mechanism supports the yoke such that a position of the yoke in the width direction on at least one side in the width direction is fixed while a position of the yoke in the width direction on another side in the width direction is variable.

2. The linear motor actuator according to claim 1, wherein the magnets are disposed on both surfaces of the yoke in the thickness direction with magnetic poles reversed.

3. The linear motor actuator according to claim 2, wherein the width direction roller guide mechanism fixes one of roller guides to a main body of the linear motor actuator while making another roller guide variable by pressing the other roller guide with an elastic element.

4. The linear motor actuator according to claim 3, wherein the thickness direction roller guide mechanism includes two pairs of roller guides, and the respective pairs of roller guides support both ends of the yoke in the width direction.

5. The linear motor actuator according to any one of claims 1 to 4, further comprising, in a detachable manner, a load suppressing roller guide mechanism configured to suppress a load generated through movement of the yoke.

6. The linear motor actuator according to claim 5, wherein the load suppressing roller guide includes a block that fixes the yoke, at least one guide shaft fixed to the block, and at least two pairs of roller guides supporting the at least one guide shaft.

7. A linear motor actuator including a yoke that is movable while facing a stator, the linear motor actuator comprising:
magnets disposed directly on both surfaces of the yoke in a thickness direction;
a width direction roller guide mechanism supporting both ends of the yoke in a width direction; and
a thickness direction roller guide mechanism supporting both ends of the yoke in the thickness direction, and
a load suppressing roller guide mechanism configured to suppress a load generated through movement of the yoke,
wherein
the width direction roller guide mechanism supports the yoke such that a position of the yoke in the width direction on at least one side in the width direction is fixed while a position of the yoke in the width direction on another side in the width direction is variable.
